# EUROPÄISCHE PATENTANMELDUNG

(11) **EP 2 256 715 A1**
(43) Veröffentlichungstag der Anmeldung: **01.12.2010**
(21) Anmeldenummer: 10002263.1
(22) Anmeldetag: 05.03.2010
(51) Int. Cl.: G09F 3/06, G09F 3/12, A01G 23/099, G09F 3/02

(54) **Holzsignierplättchen zum Kennzeichnen von Stammholz und anderem Holz**

(30) Priorität: 29.05.2009 DE 102009023259
(71) Anmelder: Latschbacher GmbH, 4484 Kronstorf (AT)
(72) Erfinder: Latschbacher, Klaus, A-4484 Kronstorf (AT)
(74) Vertreter: Vetter, Hans

(57) **Zusammenfassung**

Es wird ein Holzsignierplättchen zum Kennzeichnen von Stammholz und anderem Holz vorgeschlagen, das einen Plättchenkörper (2) zur Anbringung von Markierungen aufweist, von dessen einer Flachseite (6) aus Halter (12) zur Befestigung des Plättchens am Kopf eines zum Einschlagen in Holz dienenden Hammers vorspringen und dessen andere Flachseite (4) mit zugespitzten, stiftartigen Befestigungspins (11) versehen ist, die beim Einschlagen in Holz zwischen den Holzfasern eindringen können. Dadurch kann das Plättchen in beliebigen Lagen unabhängig von der Faserrichtung eingeschlagen werden.

## Beschreibung

Die Erfindung betrifft ein Holzsignierplättchen zum Kennzeichnen von Stammholz und anderem Holz mit den Merkmalen des Oberbegriffs des Anspruchs 1.

Derartige, beispielsweise aus der EP-B-1286325 oder der GB-A-2075464 bekannte Plättchen bestehen üblicherweise aus einem Kunststoffmaterial. Die bekannten Plättchen besitzen gekrümmte oder lineare leistenartige Befestigungsvorsprünge, die einstückig angeformt sind und die beim Einschlagen des Plättchens mittels eines Einschlaghammers in Holz in dieses eindringen und das Plättchen verankern. Beim Einschlagen in Stirnseiten von Stammholz ist das Einschlagen unproblematisch. Soll das Plättchen dagegen in die Umfangsfläche von Stammholz eingeschlagen werden, so muss darauf geachtet werden, dass die Befestigungsvorsprünge parallel zur Faserrichtung verlaufen und nicht etwa senkrecht dazu, da sie im Allgemeinen nicht in der Lage sind, die Fasern zu zerschneiden. Die Folge davon ist ein Brechen des Plättchens oder zumindest eine schlechte Verankerung. Noch problematischer ist das Einschlagen in bereits verarbeitetes oder teilweise verarbeitetes Holz, bei dem die Faserrichtung nicht oder nicht mehr erkennbar ist.

Eine Aufgabe der vorliegenden Erfindung besteht darin, ein Holzsignierplättchen der eingangs genannten Gattung zu schaffen, bei dem das Einschlagen in Holz unabhängig von der Faserrichtung in beliebigen Positionen möglich ist.

Diese Aufgabe wird erfindungsgemäß durch ein Holzsignierplättchen mit den Merkmalen des Anspruchs 1 gelöst.

Durch die stiftartigen Befestigungspins können diese beim Einschlagen des Plättchens in Holz zwischen dessen Fasern eindringen und müssen diese nicht zerschneiden, so dass eine Befestigung unabhängig von der Faserrichtung in jeder Lage möglich ist, wobei die Befestigungspins leicht in das Holz eindringen können. Eine Beschädigung der Plättchen beim Einschlagen ist somit unabhängig von der Faserrichtung nicht zu befürchten.

Durch die in den Unteransprüchen aufgeführten Maßnahmen sind vorteilhafte Weiterbildungen und Verbesserungen des im Anspruch 1 angegebenen Holzsignierplättchens möglich.

Die Befestigungspins weisen bevorzugt einen runden Querschnitt auf, jedoch kann dieser auch vieleckig sein.

Zur sicheren Befestigung des Plättchens ist an jedem Eckbereich des im Wesentlichen rechteckförmigen Plättchenkörpers wenigstens ein Befestigungspin angeordnet. Bevorzugt können auch mehrere Befestigungspins an jedem Eckbereich des Plättchenkörpers angeordnet sein, insbesondere jeweils in einer Reihenanordnung. Dabei können in einer weiteren Ausbildung der Erfindung auch jeweils Pins von nebeneinander angeordneten Eckbereichen eine Reihenanordnung bilden, die insbesondere jeweils parallel zur Schmalseite des Plättchenkörpers angeordnet ist.

In einer vorteilhaften Ausgestaltung der Erfindung ist am Plättchenkörper ein länglicher Vorsprung an derjenigen Seite des Plättchens angeformt, an der es am Hammer befestigt wird. Hierdurch bricht das Plättchen beim Einschlagen in das Holz, insbesondere in zwei Teile, was das erneute Nutzen dieses Plättchens unmöglich macht und dadurch auch einen Diebstahl wirksam verhindert.

In vorteilhafter Weise wird das gezielte Brechen des Plättchens beim Einschlagen in Holz durch einen Bereich mit herabgesetzter mechanischer Festigkeit unterstützt, entlang dem sich der längliche Vorsprung erstreckt, wobei die beiden Teile dann immer noch im Holz verankert sind.

Der Bereich mit herabgesetzter mechanischer Festigkeit erstreckt sich zweckmäßigerweise entlang der längeren Achse des Plättchens, insbesondere entlang der längeren Mittelachse, so dass das Plättchen beim Einschlagen in der Längsmitte bricht.

Der Bereich mit herabgesetzter mechanischer Festigkeit weist wenigstens eine Ausnehmung auf, deren Tiefe kleiner oder gleich der Dicke des Körpers ist, vorzugsweise gleich der Dicke des Körpers. Dabei wird dieser Bereich mit herabgesetzter mechanischer Festigkeit zweckmäßigerweise durch eine Reihe von Ausnehmungen gebildet, die rund geformt sein können, jedoch auch eine andere Gestalt beziehungsweise einen anderen Querschnitt besitzen können. Die beiden kürzeren Ränder des Plättchenkörpers sind vorzugsweise jeweils mittig mit einer Einkerbung versehen, die V-förmig gestaltet sein kann und die das Brechen in der gewünschten Linie fördert beziehungsweise erleichtert.

Der längliche Vorsprung entlang des Bereichs mit herabgesetzter mechanischer Festigkeit ist zweckmäßigerweise schmaler als dieser Bereich, um ein sicheres Brechen zu gewährleisten.

Ein Ausführungsbeispiel der Erfindung ist in der Zeichnung dargestellt und in der nachfolgenden Beschreibung näher erläutert. Es zeigen:

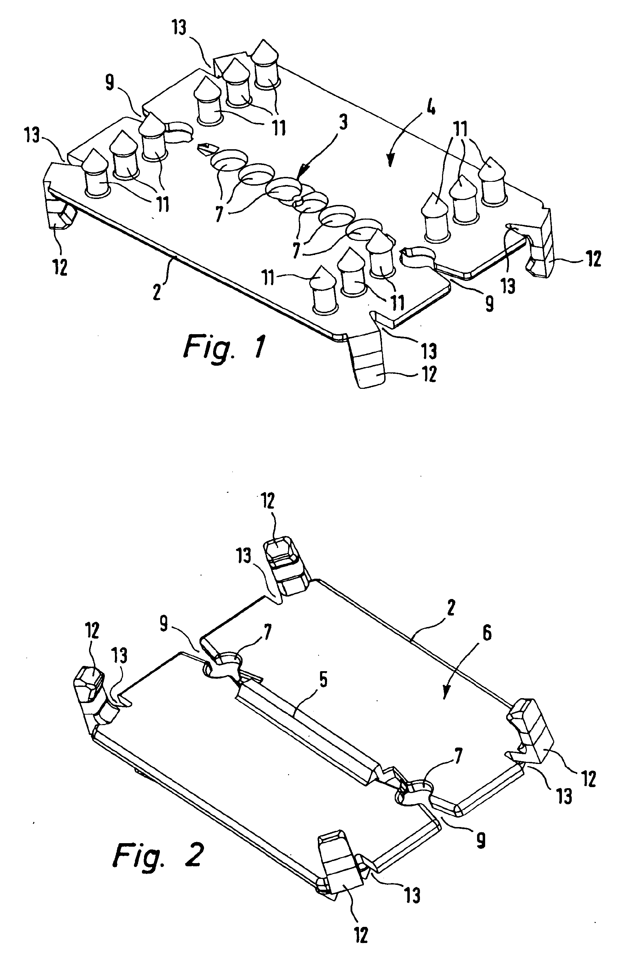

- Figur 1: eine perspektivische Ansicht der mit Befestigungs- pins versehenen Unterseite eines Holzsignier- plättchens als Ausführungsbeispiel der Erfindung und
- Figur 2: das in Figur 1 dargestellte Holzsignierplättchen in einer perspektivischen Ansicht von oben.

Das in den Figuren als Ausführungsbeispiel dargestellte Holzsignierplättchen zur Markierung von Holz besitzt einen im Wesentlichen rechteckförmigen Plättchenkörper 2, der in nicht dargestellter Weise mit Markierungen zur Kennzeichnung von Holz versehen sein kann, wobei solche Markierungen in an sich bekannter Weise aus Zahlen und/oder Buchstaben oder Strichcodes bestehen können oder als magnetische oder elektronische Markierungen ausgebildet sein können.

Der Plättchenkörper 2 weist an seiner beim Einschlagen dem Holz zugewandten Unterseite 4 zwölf zugespitzte, stiftartige Befestigungspins 11 als Befestigungsvorsprünge auf, die in zwei Reihen parallel zu den Schmalseiten des Plättchenkörpers 2 nahe diesen Schmalseiten einstückig angeformt sind. Ein sich entlang der längeren Mittelachse des Plättchenkörpers 2 erstreckender Bereich 3 mit herabgesetzter mechanischer Festigkeit wird durch eine Reihe von runden Einformungen 7 gebildet. Die Gestalt dieser Einformungen 7 kann selbstverständlich variabel gewählt werden, wobei beispielsweise ovale, mehreckige oder sonstige Einformungen gewählt werden können. Die Tiefe dieser Einformungen 7 kann der Dicke des Plättchenkörpers 2 entsprechen, so dass die Einformungen 7 Durchgangslöcher bilden, oder die Tiefe kann geringer sein.

An den beiden Enden des Bereichs 3 an den beiden Schmalseiten des Plättchenkörpers 2 ist jeweils eine V-förmige Einkerbung 9 angeordnet, die zusammen mit der ersten runden Einformung 7 des Bereichs 3 eine kombinierte Anordnung bildet.

An der einem nicht dargestellten Einschlaghammer zugewandten Oberseite des Plättchenkörpers 2 sind an den vier Ecken vier elastische, hakenartige Halter 12 als Vorsprünge angeordnet, die zur Befestigung an einem nicht dargestellten Einschlaghammer in eine Rille desselben elastisch einrasten. Zur Erhöhung der Elastizität der Halter 12 sind neben diesen kleine, schlitzartige Einformungen 13 angebracht. Entlang der längeren Mittelachse erstreckt sich auf dieser Seite ein länglicher, leisten- oder stabartiger Vorsprung 5, der beim Einschlagen des Plättchens in Holz das Brechen des Plättchens entlang der längeren Mittelachse in zwei Hälften bewirkt, indem der Einschlaghammer eine Stoßkraft über den Vorsprung 5 auf den Körper 2 ausübt. Durch die Befestigungspins 11 zu beiden Seiten des Bereichs 3 mit herabgesetzter mechanischer Festigkeit bleiben die beiden Hälften beziehungsweise Teile dennoch im Holz verankert.

Die Breite des Vorsprungs 5 ist geringer als die des Bereichs 3, was jedoch nicht zwingend ist. In Abwandlung des dargestellten Ausführungsbeispiels kann der längliche Vorsprung 5 auch unterbrochen sein und beispielsweise aus einer Reihe von einzelnen Vorsprungselementen bestehen, die im Extremfall auch pinförmig ausgebildet sein können. Weiterhin kann der Vorsprung 5 auch nicht exakt entlang der längeren Mittelachse des Plättchenkörpers 2 angeordnet sein, sondern seitlich versetzt. Er sollte jedoch den Bereich 3 mit herabgesetzter mechanischer Festigkeit zumindest geringfügig überlappen.

In einer weiteren Abwandlung des dargestellten Ausführungsbeispiels kann auch auf einen Bereich 3 mit herabgesetzter mechanischer Festigkeit verzichtet werden. Wenn der Plättchenkörper 2 zum Beispiel sehr dünnwandig ausgebildet ist, dann kann schon der längliche Vorsprung für sich ausreichen, den Bruch des Plättchens beim Einschlagen in zu bewirken.

In einer weiteren Abwandlung des dargestellten Ausführungsbeispiels kann sowohl der Bereich 3 mit herabgesetzter mechanischer Festigkeit als auch der längliche Vorsprung 5 vollständig entfallen, sofern auf ein Brechen des Plättchens beim Einschlagen in Holz verzichtet werden soll oder kann.

Zur Erzielung eines ausreichenden Halts des Holzsignierplättchens im Holz sollte zumindest an jeder der vier Ecken des Plättchenkörpers 2 je ein Befestigungspin 11 angeordnet sein. Falls eine größere Zahl von Pins gewünscht oder erforderlich ist, so kann von der im Ausführungsbeispiel dargestellten Reihenanordnung der Befestigungspins 11 auch abgewichen werden.

Die an ihrem freien Ende zugespitzten Befestigungspins 11 können leicht zwischen Fasern des Holzes eindringen, in das das Holzsignierplättchen eingeschlagen wird. Hierdurch brauchen die Fasern nicht durchschnitten zu werden, so dass ein leichtes Eindringen unabhängig von der Faserrichtung erreicht werden kann.

## Patentansprüche

1. Holzsignierplättchen zum Kennzeichnen von Stammholz und anderem Holz, mit einem Plättchenkörper (2) zur Anbringung von Markierungen, von dessen einer Flachseite (6) aus Halter (12) zur Befestigung des Plättchens am Kopf eines zum Einschlagen in Holz dienenden Hammers vorspringen und dessen andere Flachseite (4) mit Befestigungsvorsprüngen zum Einschlagen in das Holz versehen ist, **dadurch gekennzeichnet, dass** die Befestigungsvorsprünge als zugespitzte, stiftartige Befestigungspins (11) ausgebildet sind.

2. Holzsignierplättchen nach Anspruch 1, **dadurch gekennzeichnet, dass** die Befestigungspins (11) einen runden oder vieleckigen Querschnitt aufweisen.

3. Holzsignierplättchen nach Anspruch 1 oder 2, **dadurch gekennzeichnet, dass** die Befestigungspins (11) und die Halter (12) einstückig am Plättchenkörper (2) angeformt sind.

4. Holzsignierplättchen nach einem der vorhergehenden Ansprüche, **dadurch gekennzeichnet, dass** an jedem Eckbereich des im Wesentlichen rechteckförmigen Plättchenkörpers (2) wenigstens ein Befestigungspin (11) angeordnet ist.

5. Holzsignierplättchen nach Anspruch 4, **dadurch gekennzeichnet, dass** an jedem Eckbereich des Plättchenkörpers (2) mehrere Befestigungspins (11) angeordnet sind, insbesondere jeweils in einer Reihenanordnung.

6. Holzsignierplättchen nach Anspruch 5, **dadurch gekennzeichnet, dass** jeweils Befestigungspins (11) von nebeneinander angeordneten Eckbereichen eine Reihenanordnung bilden, die insbesondere jeweils parallel zu den Schmalseiten des Plättchenkörpers (2) angeordnet ist.

7. Holzsignierplättchen nach einem der vorhergehenden Ansprüche, **dadurch gekennzeichnet, dass** am Plättchenkörper (2) ein länglicher Vorsprung (5) an derjenigen Seite des Plättchens angeformt ist, an der es am Hammer befestigt wird.

8. Holzsignierplättchen nach Anspruch 7, **dadurch gekennzeichnet, dass** der Plättchenkörper (2) einen Bereich (3) mit herabgesetzter mechanischer Festigkeit aufweist, entlang dem der längliche Vorsprung (5) verläuft.

9. Holzsignierplättchen nach Anspruch 8, **dadurch gekennzeichnet, dass** sich der Bereich (3) mit herabgesetzter mechanischer Festigkeit entlang der längeren Achse des Plättchenkörpers (2) erstreckt, insbesondere im Wesentlichen entlang der längeren Mittelachse.

10. Holzsignierplättchen nach Anspruch 8 oder 9, **dadurch gekennzeichnet, dass** der Bereich (3) mit herabgesetzter mechanischer Festigkeit wenigstens eine Ausnehmung (7) aufweist, deren Tiefe kleiner oder gleich der Dicke des Plättchenkörpers (2) ist, vorzugsweise gleich der Dicke des Plättchenkörpers (2).

11. Holzsignierplättchen nach Anspruch 10, **dadurch gekennzeichnet, dass** der Bereich (3) mit herabgesetzter mechanischer Festigkeit durch eine Reihe von Ausnehmungen (7) gebildet wird.

12. Holzsignierplättchen nach einem der Ansprüche 8 bis 11, **dadurch gekennzeichnet, dass** der längliche Vorsprung (5) schmaler als der Bereich (3) mit mechanischer Festigkeit des Plättchenkörpers (2) ist.

13. Holzsignierplättchen nach einem der vorhergehenden Ansprüche, **dadurch gekennzeichnet, dass** die beiden kürzeren Ränder des Plättchenkörpers (2) jeweils mittig mit einer Einkerbung (9) versehen sind, die insbesondere V-förmig gestaltet ist.
